# DEMANDE DE BREVET EUROPEEN

(11) **EP 2 298 143 A1**
(43) Date de publication de la demande: **23.03.2011**
(21) Numéro de dépôt: 10305982.0
(22) Date de dépôt: 14.09.2010
(51) Int. Cl.: A47J 37/08

(54) **Grille-pain a porte laterale pivotante**

(30) Priorité: 18.09.2009 FR 0904472
(71) Demandeur: Seb S.A., 69130 Ecully (FR)
(72) Inventeur: Volatier, Sébastien, 21000, DIJON (FR)
(74) Mandataire: Cémeli, Eric Philippe Laurent

(57) **Abrégé**

L'invention concerne un grille-pain comprenant un boîtier (1) renfermant au moins une chambre de chauffe (11) accessible par une ouverture (12) pratiquée sur la partie supérieure (10) du boîtier (1), **caractérisé en ce qu**'une paroi latérale du boîtier (1) comprend une porte (2) montée pivotante par rapport à la paroi latérale, la porte (2) comprend au moins un support (3) porte-pain, l'axe de rotation (23) de la porte (2) est horizontal et positionné en partie basse du boîtier (1) et est distant du ou des supports (3) porte-pain de sorte qu'en position ouverte au moins une portion du pain posé sur le support (3) porte pain fait saillie du boîtier (1).

## Description

La présente invention concerne un grille-pain plus particulièrement du type comprenant une porte latérale de chargement et déchargement du pain.

Les grille-pain traditionnels comprennent en général un boîtier renfermant au moins une chambre de chauffe pour le grillage du pain. L'introduction du pain dans le grille-pain se fait par des fentes sur la partie supérieure du boîtier. Un chariot porte-pain est ensuite manoeuvré pour descendre le pain dans la chambre de chauffe. A la fin du cycle de grillage, un ressort de rappel provoque la remontée du pain. Toutefois, cette remontée peut être insuffisante pour certains formats de pain faisant que leur zone de préhension accessible est trop faible pour une prise sans risque de brûlure.

Le document US2562535 décrit un grille-pain comprenant un chargement et un déchargement du pain sur le côté du grille-pain. La chambre de chauffe comprend des ouvertures par lesquelles est introduit le pain. Compte tenu de la forme particulière du grille-pain les ouvertures sont obliques. Le chariot porte pain est monté pivotant sur le châssis du grille-pain. Ainsi, en position de grillage, le point de pivot du chariot est situé au dessus et à droite du fond du chariot porte pain. L'inconvénient de cette solution est que la poignée du chariot est très proche des éléments chauffants ce qui présente un risque pour l'utilisateur.

Le grille-pain décrit dans le document US2009/0071347 s'apparente plus à un mini-four. En effet, le grille-pain comprend une porte latérale pouvant pivoter. Le boîtier du grille-pain ne comprend pas d'autre ouverture. Pour le grillage, le pain est placé sur la porte dans un système de centrage du pain formé par une structure de fils métalliques rigides. Un contacteur autorise le déclenchement du grillage du pain, après fermeture de la porte. Le pain n'est pas visible lors de l'opération de grillage. L'accès au pain après grillage nécessite l'ouverture complète de la porte ce qui est préjudiciable à l'encombrement du grille-pain.

La présente invention vise à proposer un grille-pain facilitant l'accès au pain après grillage, sans trop modifier l'architecture générale du grille-pain.

Cet objectif est atteint par un grille-pain comprenant un boîtier renfermant au moins une chambre de chauffe accessible par une ouverture pratiquée sur la partie supérieure du boîtier, **caractérisé en ce qu**'une paroi latérale du boîtier comprend une porte montée pivotante par rapport à la paroi latérale, la porte comprend au moins un support porte-pain, l'axe de rotation de la porte est horizontal et positionné en partie basse du boîtier et est distant du ou des supports porte-pain de sorte qu'en position ouverte au moins une portion du pain posé sur le support porte pain fait saillie du boîtier.

Ainsi, l'architecture n'est pas totalement modifiée puisque le chargement du pain peut continuer à se faire par les ouvertures situées sur la partie supérieure. Le fait qu'un support porte-pain soit monté sur la porte pivotante permet de sécuriser l'utilisation du grille-pain vis-à-vis de la chaleur dégagée par les éléments chauffants. Enfin en décalant l'axe de rotation du support porte-pain, la portion de pain accessible après ouverture de la porte est très grande.

Selon un mode particulier, le ou les supports porte-pain sont fixés sur la porte pivotante pour qu'en position ouverte au moins 60% de la surface du pain soit à l'extérieur du boîtier.

Ainsi, en décalant l'axe de rotation du ou des supports porte-pain, l'ouverture de la porte pivotante permet de dégager une grande partie de la tranche de pain.

Dans d'autres variantes de réalisation, le grille-pain :
- comprend un panneau de commande fixé sur le boîtier et situé sous la porte pivotante,
- chaque support porte-pain comprend deux montants, un premier montant est fixé sur la surface intérieure de la porte, le deuxième montant est solidaire du premier pour former sensiblement un V, l'angle entre le premier et le deuxième montants et l'angle entre le premier montant et la surface inférieure de la porte sont déterminés pour qu'en position ouverte le premier montant soit sensiblement horizontal et qu'en position fermée le deuxième montant soit en position horizontale,

- les rebords longitudinaux du premier montant du support porte-pain comprennent des parois latérales formant un guide de maintien du pain en position ouverte ;
- chaque chambre de chauffe comprend des moyens de centrage du pain comprenant une paire de grilles actionnée par le mouvement du support porte-pain ;
- chaque chambre de chauffe comprend des éléments chauffants et le grille-pain comprend des moyens de déconnexion des éléments chauffants déclenchés lors de l'ouverture de la porte pivotante ;
- la porte pivotante comprend une poignée de préhension dans sa partie supérieure, distante de la ou des ouvertures d'introduction de la ou des chambres de chauffe.

D'autres particularités et avantages de la présente invention apparaîtront dans la description ci après d'un mode de réalisation donné à titre d'exemple non limitatif et illustré par les dessins mis en annexe dans lesquels :

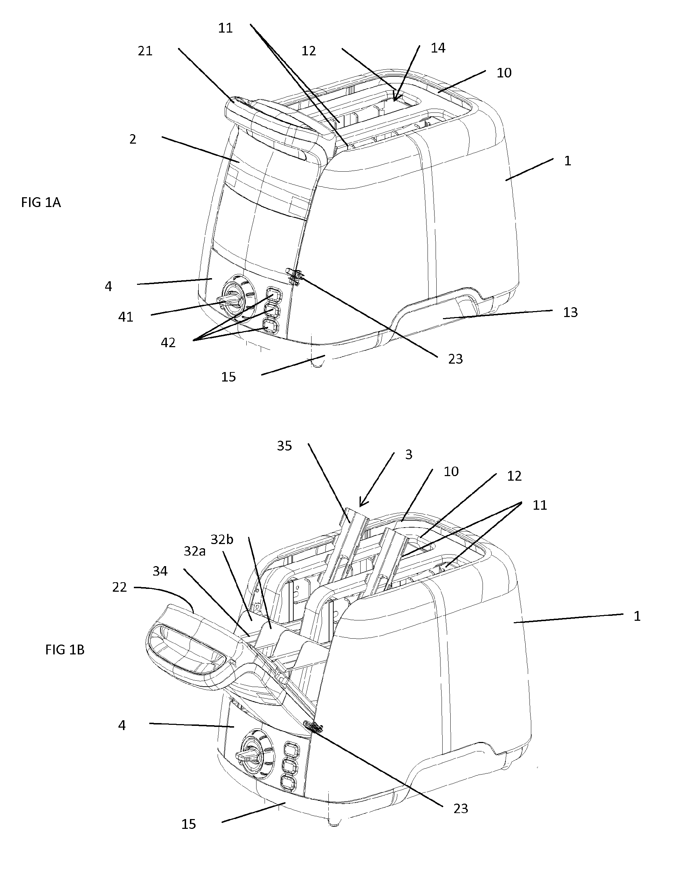

La figure 1A est une vue en perspective, de face, d'un grille pain conforme à la présente invention en position fermée,
La figure 1B est une vue en perspective, de face, d'un grille pain conforme à la présente invention en position ouverte,
La figure 2 est une vue de côté et de détail d'un grille pain conforme à la présente invention,
et la figure 3 est une vue de détails du dispositif de coupure des éléments chauffants du grille-pain.

Le grille-pain conforme à la présente invention comprend un boîtier 1 qui comprend, de façon classique, une chambre de cuisson 14 qui est délimitée par une paroi de fond, deux parois latérales longitudinales, deux parois latérales transversales et une paroi supérieure qui comporte des ouvertures 12 pour le passage du pain. La chambre de cuisson 14 peut comprendre plusieurs compartiments 11 permettant le grillage simultané de plusieurs tranches de pain. Ces compartiments ou chambres de chauffe 11 comprennent des éléments chauffants associés permettant le grillage du pain. Les éléments chauffants sont de type connu tel que barreaux de quartz ou fils résistif chauffants. Chaque chambre de chauffe comprend une ouverture 12 débouchant sur la partie supérieure 10 du boîtier 1. Cette ouverture peut servir à introduire le pain dans le grille-pain. Le boîtier 1 comprend également une embase 15 permettant de poser le grille-pain sur une surface sensiblement plane. De même, l'embase 15 peut comprendre un tiroir amovible 13 permettant de récupérer les miettes de pain.

Selon l'invention, le boîtier 1 comprend une porte 2 latérale pivotante autour d'un axe 23 horizontal. La porte 2 pivotante est montée sur une face du boîtier 1. Ainsi, la porte 2 pivotante, et en particulier la paroi intérieure 22 de la porte 2, forme l'une des parois de la chambre de cuisson 14 du grille-pain. L'axe de rotation 23 de la porte 2 pivotante est positionné dans la partie basse du boîtier 1. De même, l'axe de rotation 23 est placé dans le bord inférieur de la porte 2. Selon le mode de réalisation présenté, l'axe de rotation 23 est positionné dans le 1/3 inférieur du boîtier 1. Lorsque la porte 2 pivotante est fermée, la surface extérieure de la porte forme la paroi latérale du boîtier 1 du grille-pain. Ainsi, la forme générale du boîtier 1 est très similaire à celle d'un grille-pain classique.

La porte 2 pivotante comprend également une poigné de préhension 21. La poignée, par exemple sous la forme d'une anse horizontale, est située dans la partie supérieure de la porte 2 pivotante et sur la face extérieure. D'autres formes de poignées sont également envisageables : forme bouton, forme annulaire verticale, etc. Selon une variante non représentée, la poigné 21 peut être positionnée légèrement en dessous du rebord supérieur de la porte de sorte que ce rebord forme un écran protégeant de la chaleur dégagée lors du fonctionnement du grille-pain. Le rebord de la porte 2 pivotante peut également dépasser de la partie supérieure du boîtier 1 pour augmenter l'effet d'écran thermique. De même, une butée peut-être prévue dans le boîtier 1 pour éviter une rotation excessive de la porte 2 pivotante lors de son ouverture. On peut également prévoir une contre-poignée ou proéminence sur l'un ou sur les deux bords latéraux de boîtier afin de maintenir celui-ci stable lorsque l'on tire sur la poignée de porte.

La paroi 22 intérieure de la porte 2 latérale comprend un support 3 porte-pain. Lorsque le grille-pain comprend plusieurs compartiments, un support 3 porte-pain est prévu pour chaque compartiment. Le support 3 porte-pain est fixé sur la porte 2 latérale de sorte qu'il est également pivotant par rapport au boîtier 1. La fixation du support porte-pain sur la porte 2 est choisie pour que l'axe de rotation de la porte 2 soit distant du support 3 porte-pain. Ainsi, l'amplitude de déplacement du support 3 porte-pain est plus importante ce qui permet, lors de l'ouverture de la porte 2 pivotante, de dégager une plus grande surface du pain.

Le support 3 porte-pain comprend un premier montant 34 dont une première extrémité est fixée sur la porte 2 latérale. La deuxième extrémité du premier montant 34 est fixée à un deuxième montant 35 pour former un V. La forme générale des deux montants 34, 35 est une bande comprenant un rebord sur au moins une portion de sa longueur. Selon le mode de réalisation présenté aux figures, les rebords du premier montant 34 sont constitués de parois latérales 32a, 32b perpendiculaires au premier montant 34. Ces parois latérales 32a, 32b forment un guide ou un maintien du pain placé sur le support 3 porte-pain. Ces parois latérales 32a, 32b permettent également d'empêcher le basculement du pain lorsque la porte 2 pivotante est en position ouverte. Le deuxième montant 35 peut comprendre des évidements ou ouvertures destinés à laisser tomber les miettes de pain dans le tiroir amovible 13 situé sous le boîtier 1 du grille-pain.

Le premier montant 34 forme un angle β avec la paroi intérieure 22 de la porte déterminé pour qu'en position d'ouverture de la porte 2 pivotante, le premier montant soit sensiblement horizontal. A titre d'exemple, l'angle β est compris entre 30° et 45°. De même, l'angle α du V formé par les deux montants 34, 35 est choisi pour que le deuxième montant soit sensiblement horizontal lorsque la porte 2 latérale est en position de fermeture. A titre d'exemple, l'angle entre le premier et le deuxième montant est compris entre 100° et 120°. En fonction, des valeurs des angles choisies, au moins 60% de la surface d'une tranche de pain est à l'extérieur du boîtier 1, lorsque la porte 2 latérale est ouverte.

La porte 2 pivotante peut comprendre un isolant thermique pour éviter l'élévation de température liée à l'échauffement du support 3 porte-pain.

Chaque chambre de chauffe 11 comprend également des moyens 36 de centrage du pain. Les moyens 36 de centrage comprennent, pour chaque chambre de chauffe 11, une paire de grilles 36 montée verticalement dans la chambre de chauffe 11. Chaque grille 36 est constituée d'un assemblage de tiges métalliques. Ces grilles 36 sont articulées pour d'une part, laisser un espace suffisant pour le passage du support 3 porte-pain et d'autre part, pour pouvoir maintenir le pain lorsque celui-ci est introduit dans le grille-pain. Le mouvement des grilles 36 vers le pain est, par exemple, assuré par une liaison pivot (non représentée) sur laquelle est montée la paire de grilles 36. La liaison pivot est située en partie basse du boîtier 1 et par exemple sous le support 3 porte-pain afin de libérer de l'espace dans la chambre de chauffe. La liaison pivot est actionnée directement ou indirectement par le mouvement du support 3 porte-pain. Ainsi, lorsque le deuxième montant 35 du support 3 porte-pain arrive au fond de la chambre de chauffe, les grilles 36 ont un mouvement l'une vers l'autre.

Le boîtier 1 comprend également un panneau 4 de commande comprenant une électronique de commande (non représentée) connue en soi et plusieurs boutons 41, 42 permettant à l'utilisateur notamment d'allumer et d'éteindre le grille-pain ou de choisir le niveau de grillage du pain. A titre d'exemple, le bouton 41 de sélection du niveau de grillage est du type molette rotative. Le panneau 4 de commande est par exemple fixé sous la porte 2 latérale.

L'électronique de commande assure la mise en marche et l'arrêt des éléments chauffants. L'électronique de commande comprend également un dispositif de coupure de l'alimentation électrique des éléments chauffants lors de l'ouverture de la porte.

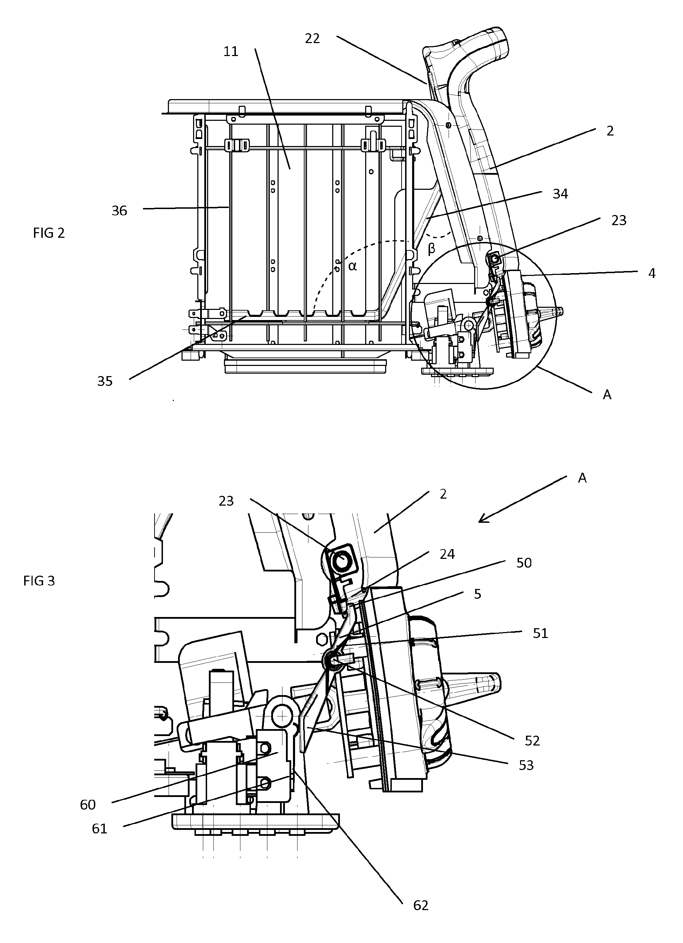

Une variante de réalisation du dispositif de coupure est représentée en détail figure 3. Le dispositif comprend un interrupteur 60 muni d'un microcontact 61 et d'une lame flexible 62. L'interrupteur 60 est monté sur le circuit d'alimentation électrique des moyens de chauffe. Le contact entre la lame flexible 62 et le microcontact ferme le circuit électrique. Le dispositif comprend également un levier 5 monté en rotation sur un axe 52 fixe par rapport au boîtier 1. Lorsque la porte 2 pivotante est en position de fermeture, une première extrémité 50 du levier 5 est engagée dans une encoche 24 formée dans le bord inférieur de la porte 2 pivotante. La deuxième extrémité 53 du levier 5 pousse la lame flexible de l'interrupteur 60 contre le microcontact 61. Un ressort 51 monté sur le levier tend à entraîner la rotation du levier dans le sens antihoraire selon la figure 3.

Le fonctionnement du dispositif de coupure est le suivant. Comme décrit précédemment, lorsque la porte 2 pivotante est fermée, la deuxième extrémité 53 du levier 5 pousse la lame flexible contre le microcontact et ferme le circuit d'alimentation électrique des moyens de chauffage. Lorsque la porte 2 pivotante s'ouvre, la première extrémité 50 du levier 5 n'est plus bloquée dans l'encoche 24 de la porte 2. Le ressort entraîne alors la rotation du levier 5 dans le sens antihoraire. La deuxième extrémité 53 ne pousse alors plus sur la lame flexible 62 ce qui ouvre le circuit d'alimentation électrique des éléments chauffants. Le dispositif de coupure évite ainsi à un utilisateur les risques de brûlure en cas d'ouverture de la porte lors d'un cycle de grillage.

Le dispositif de coupure peut aussi être constitué d'un bouton poussoir (non représenté) placé derrière la porte latérale. Le bouton est enclenché à la fermeture de la porte pour fermer le circuit d'alimentation électrique des éléments chauffants. Lors de l'ouverture, le bouton poussoir est relâché pour ouvrir le circuit d'alimentation. D'autres dispositifs de coupure peuvent également être employés sans sortir du cadre de l'invention.

Le fonctionnement du grille-pain selon l'invention est le suivant. L'utilisateur peut introduire le pain dans les chambres de chauffe 11 soit, porte 2 pivotante fermée, par les ouvertures 12, soit en déposant la tranche de pain sur le premier montant 34 du support 3 porte pain lorsque la porte 2 pivotante est ouverte et en refermant la porte 2. La rotation de la porte 2 pivotante provoque le basculement de la tranche de pain sur le deuxième montant 35 du support 3 porte-pain. L'utilisateur choisit le niveau de grillage par l'intermédiaire du bouton rotatif 41 et lance le cycle de grillage en appuyant sur un des boutons 42. Cette action provoque la fermeture du circuit d'alimentation électrique des moyens de chauffage. A la fin du cycle ou pendant le cycle, l'utilisateur récupère le pain en ouvrant la porte 2 pivotante.

Grâce à l'architecture de la porte 2 pivotante le retrait du pain se fait loin de la chambre de chauffe 11 ce qui diminue le risque de brûlure de l'utilisateur. La tranche de pain est également plus facilement accessible en fin de cycle de grillage sans que l'architecture générale du grille-pain ne soit profondément modifiée par rapport à l'architecture d'un grille-pain classique.

## Revendications

1. Grille-pain comprenant un boîtier (1) renfermant au moins une chambre de chauffe (11) accessible par une ouverture (12) pratiquée sur la partie supérieure (10) du boîtier (1), **caractérisé en ce qu'**une paroi latérale du boîtier (1) comprend une porte (2) montée pivotante par rapport à la paroi latérale, la porte (2) comprend au moins un support (3) porte-pain, l'axe de rotation (23) de la porte (2) est horizontal et positionné en partie basse du boîtier (1) et est distant du ou des supports (3) porte-pain de sorte qu'en position ouverte au moins une portion du pain posé sur le support (3) porte pain fait saillie du boîtier (1).

2. Grille-pain selon la revendication 1 **caractérisé en ce que** le ou les supports (3) porte-pain sont fixés sur la porte (2) pivotante pour qu'en position ouverte au moins 60% de la surface du pain soit à l'extérieur du boîtier (1).

3. Grille-pain selon l'une des revendications 1 ou 2 **caractérisé en ce qu'**il comprend un panneau (4) de commande fixé sur le boîtier (1) et situé sous la porte (2) pivotante.

4. Grille-pain selon l'une des revendications précédentes **caractérisé en ce que** chaque support (3) porte-pain comprend deux montants, un premier montant (34) est fixé sur la surface intérieure de la porte (2), le deuxième montant (35) est solidaire du premier montant (34) pour former sensiblement un V, l'angle (α) entre le premier (34) et le deuxième (35) montants et l'angle (β) entre le premier montant (34) et la surface inférieure de la porte (2) sont déterminés pour qu'en position ouverte le premier montant (34) soit sensiblement horizontal et qu'en position fermée le deuxième montant (35) soit en position horizontale.

5. Grille-pain selon la revendication 4 **caractérisé en ce que** les rebords longitudinaux du premier montant (34) du support (3) porte-pain comprennent des parois latérales (32a, 32b) formant un guide de maintien du pain en position ouverte.

6. Grille-pain selon l'une des revendications précédentes **caractérisé en ce que** chaque chambre de chauffe (11) comprend des moyens de centrage du pain comprenant une paire de grilles (36) actionnée par le mouvement du support (3) porte-pain.

7. Grille-pain selon l'une des revendications précédentes **caractérisé en ce que** chaque chambre de chauffe (11) comprend des éléments chauffants et **en ce que** le grille-pain comprend des moyens (5) de déconnexion des éléments chauffants déclenchés lors de l'ouverture de la porte (2) pivotante.

8. Grille-pain selon l'une des revendications précédentes **caractérisé en ce que** la porte (2) pivotante comprend une poigné (21) de préhension dans sa partie supérieure, distante de la ou des ouvertures d'introduction de la ou des chambres (11) de chauffe.
